# EUROPEAN PATENT SPECIFICATION

(11) **EP 4 071 422 B1**
(45) Date of publication and mention of the grant of the patent: **25.06.2025**
(21) Application number: 22166460.0
(22) Date of filing: 04.04.2022
(51) Int. Cl.: F24F 13/14, F16K 1/16, F16K 17/36, F24F 13/15, F24F 13/08

(54) **BLAST DAMPER**
SPRENGDÄMPFER
AMORTISSEUR DE SOUFFLE

(30) Priority: 07.04.2021 FI 20215412
(43) Date of publication of application: 12.10.2022
(73) Proprietor: VG Innovations S.à r.l., 2146 Luxembourg (LU)
(72) Inventor: Niemi, Timo, 00880 Helsinki (FI); Lahtinen, Osmo, 00880 Helsinki (FI)
(74) Representative: Boco IP Oy Ab

(56) References cited:
- WO-A1-2016/142577
- CN-A- 110 715 086
- CN-U- 212 360 951
- US-A- 4 208 010
- US-A- 4 210 279
- US-A- 6 129 113

## Description

### Field of the invention

The invention relates to a blast damper as defined in the preamble of independent claim 1.

In petrochemical plants, oil-drilling rigs, process industry plants and other corresponding plants, it is necessary to safeguard against sudden and high pressure loads caused by explosions, sudden fires, or the like. Ventilation systems are safeguarded against such pressure loads by installing in them pressure valves or blast dampers that close automatically when a pressure load of the above-mentioned type is directed to them. Pressure valves of this type may also be installed at a desired location in a ventilation shaft or directly inside or outside a pressure load-resistant wall in connection with a ventilation shaft. Prior art pressure valves comprise plate-like closing blades arranged on turning axles. Normally, there are two or more axles in a pressure valve and they extend parallel at a distance from each other across a flow channel formed by the pressure valve, through which air or some other flowing medium flows through the pressure valve. One or more closing blades may be installed next to each other on one axle. In a normal operating mode, the closing blades are in an open position that allows air or some other flowing medium to flow through the closing blades and the pressure valve. Thus, in the open position, the closing blades are set in the flow direction of the air flowing through the pressure valve or at an angle relative to the flow direction. Normally a protective screen is also provided at an upstream end of the flow channel to prevent solid objects or the like from entering the flow channel.

Publication WO 2016/142577 presents a pressure valve that is provided with a protective screen. A problem with the protective screen of this known pressure valve is that is the protective screen has a complicated construction, and consequently that the protective screen is difficult to manufacture and that the protective screen has large extension in the direction of the flow through the flow channel.

### Objective of the invention

The object of the invention is to provide a blast damper that solves the above-mentioned problems.

### Short description of the invention

The blast damper of the invention is characterized by the definitions of independent claim 1.

Preferred embodiments of the blast damper are defined in the dependent claims.

### List of figures

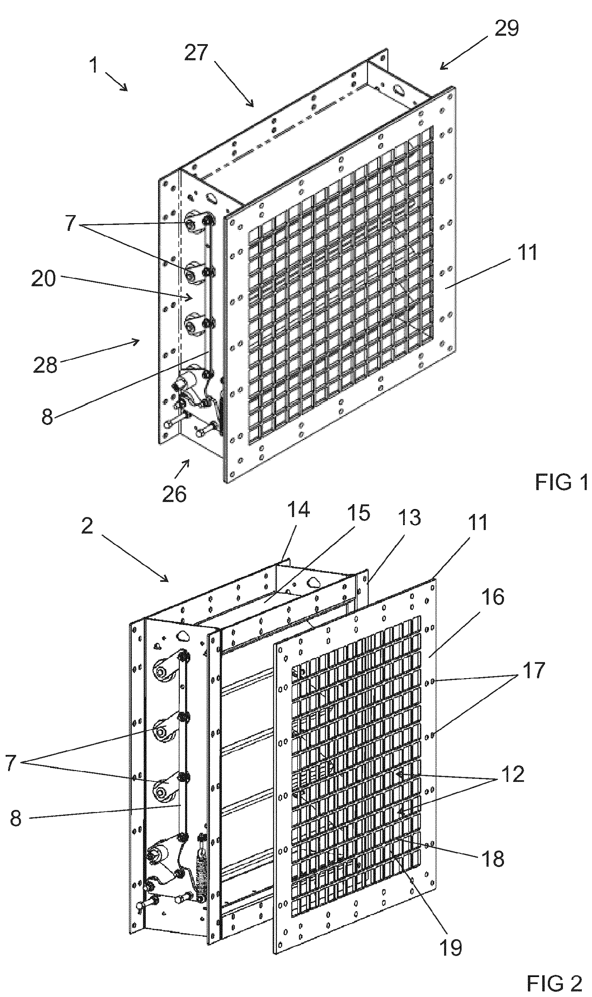

In the following the invention will described in more detail by referring to the figures of which
Figure 1 shows an embodiment of the blast damper,
Figure 2 shows the blast damper shown in figure 1 in a state, where the protective screen has been removed and moved to a distance from the rest of the blast damper,

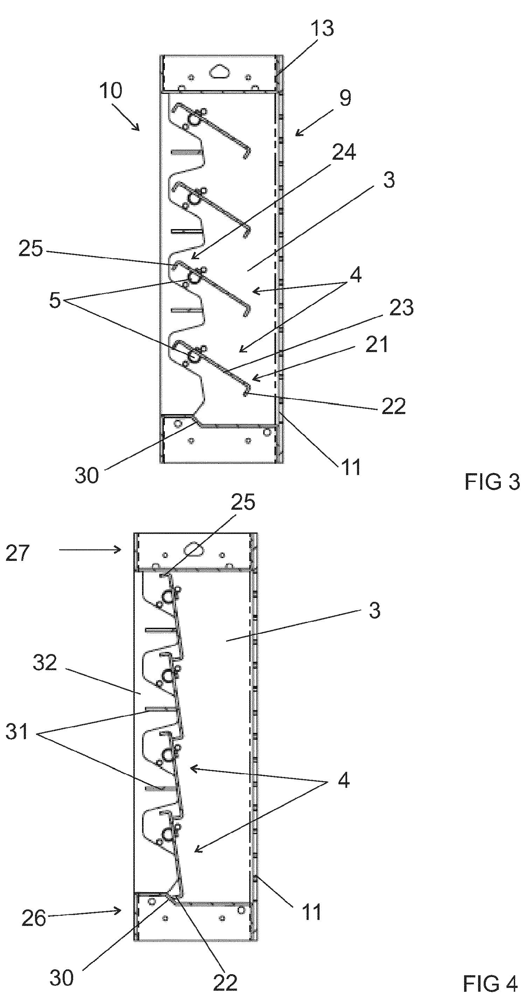

Figure 3 shows the blast damper shown in figure 1 in cross section in a state, where the closing blades are in an open position,
Figure 4 shows the blast damper shown in figure 1 in cross section in a state, where the closing blades are in a closed position,

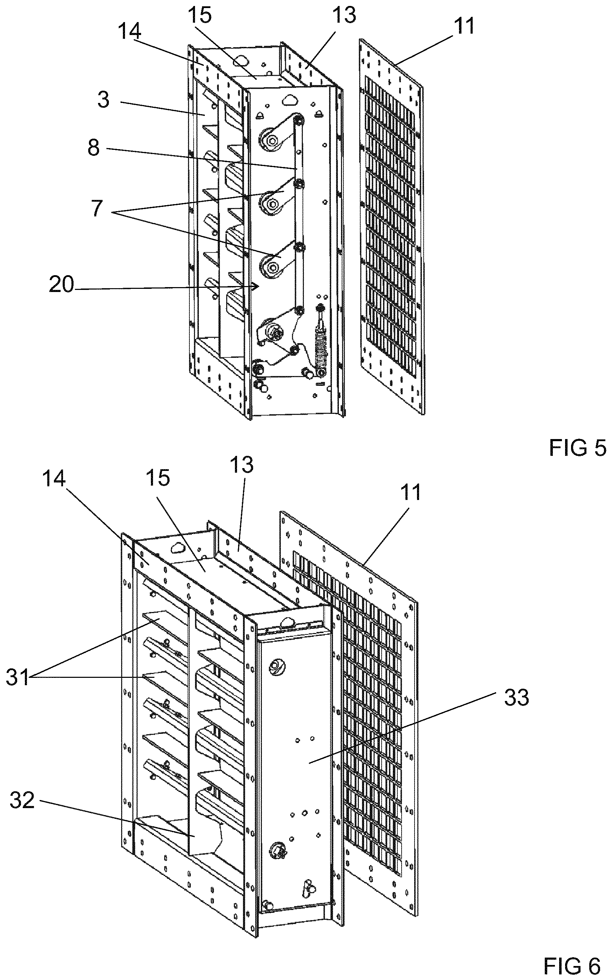

Figure 5 shows the blast damper shown in figure 1 in a state, where the protective screen has been removed and moved to a distance from the rest of the blast damper
Figure 6 shows the blast damper shown in figure 1 in a state, where the protective screen has been removed and moved to a distance from the rest of the blast damper, and where the actuating mechanism is covered with a protective cover,

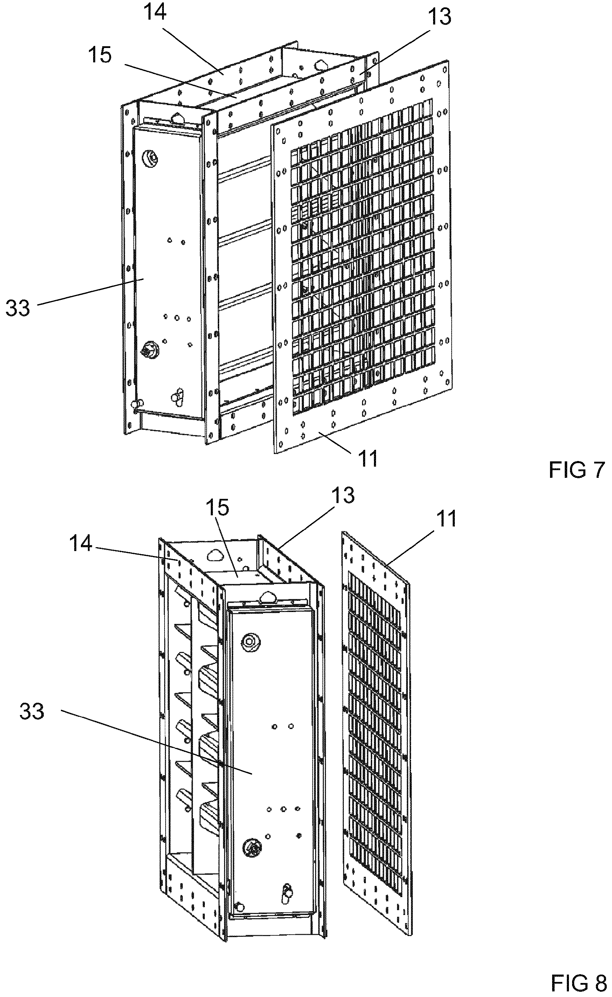

Figure 7 shows the blast damper shown in figure 1 in a state, where the protective screen has been removed and moved to a distance from the rest of the blast damper, and where the actuating mechanism is covered with a protective cover, and
Figure 8 shows the blast damper shown in figure 1 in a state, where the protective screen has been removed and moved to a distance from the rest of the blast damper, and where the actuating mechanism is covered with a protective cover.

### Detailed description of the invention

Next the blast damper 1 and some variants and embodiments of the blast damper 1 will be presented in greater detail.

The blast damper 1 comprises a frame 2 defining a flow channel 3 for air flow through the blast damper 1.

The flow channel 3 defines an upstream end 9 and a downstream end 10.

The blast damper 1 comprises closing blades 4 pivotally arranged in the flow channel 3. The closing blades 4 are preferably, but not necessarily, arranged in parallel in the flow channel 3.

Each closing blade 4 can be pivoted about a pivot axis (not marked with a reference numeral) between a closed position and an open position. The pivot axes of the closing blades 4 are preferably, but not necessarily, parallel.

Each closing blade 4 is pivotally supported at the frame 2 by means of shaft means 5.

The blast damper 1 comprises an actuating mechanism 20 configured to simultaneously pivot each closing blade 4 between the closed position so as to prevent air flow through the blast damper 1 and the open position so as to allow air flow through the blast damper 1.

The actuating mechanism 20 comprises preferably, but not necessarily, a prestressing arrangement for prestressing the closing blades 4 into the open position and for triggering the closing blades 4 to turn into the closed position in response to a pressure increase in the flow channel 3.

The prestressing arrangement can for example function so that the closing blades 4 are configured to pivot into the closed position in response to a pressure increase in the flow channel 3 sensed by at least one of the closing blades 4. The closing blades 4 are in such case preferably, but not necessarily, configured to pivot into the closed position in response to a pressure increase exceeding a threshold value in the flow channel 3 sensed by at least one of the closing blades 4.

The prestressing arrangement can for example function so that the closing blades 4 are configured to pivot into the closed position in response to a pressure increase in the flow channel 3 sensed by a separate pressure sensing device (not illustrated in the figures) that is functionally connected to at least one of the actuating mechanism and at least one of the closing blades. In such case, the closing blades 4 are preferably, but not necessarily, configured to pivot into the closed position in response to a pressure increase exceeding a threshold value in the flow channel 3 sensed by such separate pressure sensing device.

The blast damper 1 comprises a protective screen 11 at the upstream end 9 of the flow channel 3. A purpose of the protective screen 11 is to prevent solid objects or the like from entering the flow channel 3.

The protective screen 11 is formed of sheet material and being planar and being provided with flow openings 12.

The sheet material is a metal plate.

The sheet material has a monolithic structure.

The protective screen 11 has a monolithic structure. An example of a protective screen 11 of monolithic structure is a protective screen 11 formed of a metal plate by machining it into the final form and dimensions and design.

Because protective screen 11 is formed of sheet material and being planar and being provided with flow openings 12, the protective screen 11 of the blast damper 1 is therefore of a simple construction, because it can for example be made of a metal sheet by machining the metal sheet to have the desired design and dimensions. Laser cutting can be used in the manufacturing especially if the sheet material is a metal plate. As the protective screen 11 is formed of a sheet material and being planar, the extension in the direction of the flow through the flow channel 3 of the blast damper 1 will also be small, because the extension in the direction of the flow through the flow channel 3 of the blast damper 1 is basically the thickness of the sheet material. This makes it possible to use and install the blast damper 1 also in thinner walls compared to what is possible with known blast dampers.

The frame 2 of the blast damper 1 comprises preferably, but not necessarily, a first planar flange 13 at the upstream end 9 of the flow channel 3.

If the frame 2 of the blast damper 1 comprises a first planar flange 13 at the upstream end 9 of the flow channel 3, the frame 2 comprises preferably, but not necessarily, a second planar flange 14 at the downstream end 10 of the flow channel 3 so that the first planar flange 13 and the and second planar flange 14 are essentially parallel, and the frame 2 comprises preferably, but not necessarily, a web section 15 between the first planar flange 13 and the second planar flange 14.

The frame 2 of the blast damper 1 is preferably, but not necessarily, formed of metal sheet material.

If the frame 2 of the blast damper 1 comprises a first planar flange 13 at the upstream end 9 of the flow channel 3, the protective screen 11 is preferably, but not necessarily, parallel with the first planar flange 13.

If the frame 2 of the blast damper 1 comprises a first planar flange 13 at the upstream end 9 of the flow channel 3, the protective screen 11 is preferably, but not necessarily, mounted to abut the first planar flange 13 of the frame 2.

If the frame 2 of the blast damper 1 comprises a first planar flange 13 at the upstream end 9 of the flow channel 3, the protective screen 11 has preferably, but not necessarily, a frame part 16 that configured to abut the first planar flange 13 of the frame 2 and that is provided with through holes 17 for fastening means to fasten the protective screen 11 to the first planar flange 13 of the frame 2, so that the flow openings 12 are provided in a central part (not marked with a reference numeral) that is surrounded by the frame part 16.

If the frame 2 of the blast damper 1 comprises a first planar flange 13 at the upstream end 9 of the flow channel 3, the protective screen 11 has preferably, but not necessarily, essentially the same thickness as the first planar flange 13 of the frame 2.

The flow openings 12 of the protective screen 11 are preferably, but not necessarily, formed by a grid (not marked with a reference numeral) with longitudinal grid members 18 and transversal grid members 19 formed by material of the planar monolithic part. At least some of the flow openings 12 can alternatively be round holes or have another form. The form and the dimensions of the flow openings can be selected for example in accordance with the required strength of the protective screen 12 or to have a certain look.

The actuating mechanism 20 comprises preferably, but not necessarily, turning levers 7 so that one turning lever 7 is fixed to the shaft means 5 of each closing blade 4 and a common operating lever 8 in turnably fixed to each turning lever 7 such that the closing blades 4 are configured to simultaneously pivot between the closed position so as to prevent air flow through the blast damper 1, and the open position so as to allow air flow through the blast damper 1.

A protective cover 33 can be provided to protect the actuating mechanism 20.

The frame 2 comprises preferably, but not necessarily, a first profile section 26, a second profile section 27 that is parallel with the first profile section 26, a third profile section 28, and a fourth profile section 29 that is parallel with the third profile section 28 so that the first profile section 26 and the second profile section 27 extend in parallel with the pivot axes of the closing blades 4, and so that the first profile section 26, the second profile section 27, the third profile section 28, and the fourth profile section 29 together limits the flow channel 3.

Each closing blade 4 have preferably, but not necessarily, a leading edge 21 provided with a leading end section 22 that extends perpendicularly to a middle section 23 of the closing and a trailing edge 24 provided with a trailing end section 25 that extends perpendicularly to the middle section 23 of the closing blades 4 so that the closing blades 4 have an U-shaped cross-section form. Each closing blade 4 is preferably, but not necessarily, made of sheet metal. If the frame 2 comprises, a first profile section 26, a second profile section 27 that is parallel with the first profile section 26, a third profile section 28, and a fourth profile section 29 that is parallel with the third profile section 28 so that the first profile section 26 and the second profile section 27 extend in parallel with the pivot axes of the closing blades 4, and so that the first profile section 26, the second profile section 27, the third profile section 28, and the fourth profile section 29 together limits the flow channel 3 and if each closing blade 4 have a leading edge 21 provided with a leading end section 22 that extends perpendicularly to a middle section 23 of the closing and a trailing edge 24 provided with a trailing end section 25 that extends perpendicularly to the middle section 23 of the closing blades 4 so that the closing blades 4 have an U-shaped cross-section form, the closing blades 4 are preferably, but not necessarily, dimensioned so that when each closing blade 4 is in the closed position, the leading end section of the closing blade 4 settles against the middle section of the adjacent closing blade 4 and so that the leading end section of the closing blade 4 closest to the first profile section 26 of the frame 2 settle against the first profile section 26 of the frame 2, and so that the trailing end section of the closing blade 4 closest to the second profile section 27 of the frame 2 settle against the second profile section 27 of the frame 2.

In the blast damper 1 illustrated in the figures, the first profile section 26 of the frame 2 has a step formation 30 and the leading end section of the closing blade 4 closest to the first profile section 26 of the frame 2 settle against the step formation of the first profile section 26 of the frame 2. Provision of such leading end section and of such trailing end section makes the closing blades 4 stiffer and makes the closing blades 4 to more securely close the flow channel 3 in the closed position.

In the flow channel 3 can flow controllers 31 be provided between two adjacent closing blades 4, as illustrated in the figures. In the figures, the flow controllers 31 extend between the third profile section 28 and the fourth profile section 29 essentially parallel to the flow channel 3 and to the flow direction of the blast damper 1 and essentially perpendicularly to the third profile section 28 of the frame 2 and to the fourth profile section 29 of the frame 2 and essentially in parallel with the first profile section 26 of the frame 2 and the second profile section 27 of the frame 2. A support 32 for the flow controllers 31 can be provided essentially in the middle of the flow channel 3. The support 32 can, as illustrated in the figures, extend between the first profile section 26 and the second profile section 27 essentially parallel to the flow channel 3 and to the flow direction of the blast damper 1 and essentially perpendicularly to the first profile section 26 of the frame 2 and to the second profile section 27 of the frame 2 and essentially in parallel with the third profile section 28 of the frame 2 and with the fourth profile section 29 of the frame 2. The closing blades 4 can be dimensioned so, as illustrated in the figures, that when each closing blade 4 is in the closed position, the middle section of the closing blades 4, except for the middle section of the closing blade 4 closest to the first profile section 26 of the frame 2 settle against the flow controllers 31.

## Claims

1. A blast damper (1) comprising
a frame (2) defining a flow channel (3) for air flow through the blast damper (1), wherein the flow channel (3) defines an upstream end (9) and a downstream end (10),
closing blades (4) pivotally arranged in the flow channel (3), wherein each closing blade (4) can be pivoted about a pivot axis between a closed position and an open position and wherein each closing blade (4) is pivotally supported at the frame (2) by means of shaft means (5),
an actuating mechanism (20) configured to simultaneously pivot each closing blade (4) between the closed position so as to prevent air flow through the blast damper (1) and the open position so as to allow air flow through the blast damper (1), and
a protective screen (11) at the upstream end (9) of the flow channel (3),
**characterized**
**by** the protective screen (11) being formed of sheet material and being planar and being provided with flow openings (12),
by the sheet material being a metal plate.
by the sheet material having a monolithic structure. and
by the protective screen (11) having a monolithic structure.

2. The blast damper (1) according to claim 1, **characterized**
**by** the frame (2) comprising a first planar flange (13) at the upstream end (9) of the flow channel (3).

3. The blast damper (1) according to claim 2, **characterized**
**by** the frame (2) comprising a second planar flange (14) at the downstream end (10) of the flow channel (3), wherein the first planar flange (13) and the second planar flange (14) being essentially parallel, and
by the frame (2) comprising a web section (15) between the first planar flange (13) and the second planar flange (14).

4. The blast damper (1) according to claim 2 or 3, **characterized**
**by** the protective screen (11) being parallel with the first planar flange (13).

5. The blast damper (1) according to any of the claims 2 to 4, **characterized**
**by** the protective screen (11) being mounted to abut the first planar flange (13) of the frame (2).

6. The blast damper (1) according to claim 5, **characterized**
**by** the protective screen (11) having a frame part (16) that configured to abut the first planar flange (13) of the frame (2) and that is provided with through holes (17) for fastening means to fasten the protective screen (11) to the first planar flange (13) of the frame (2), and
by the flow openings (12) are provided in a central part that is surrounded by the frame part (16).

7. The blast damper (1) according to any of the claims 2 to 6, **characterized**
**by** the protective screen (11) having the same thickness as the first planar flange (13) of the frame (2).

8. The blast damper (1) according to any of the claims 1 to 7, **characterized**
**by** the flow openings (12) of the protective screen (11) being formed by a grid with longitudinal grid members (18) and transversal grid members (19) formed by material of the planar monolithic part.

9. The blast damper (1) according to any of the claims 1 to 8, **characterized**
**by** an actuating mechanism (20) comprising turning levers (7) so that one turning lever (7) is fixed to the shaft means (5) of each closing blade (4) and a common operating lever (8) in turnably fixed to each turning lever (7) such that the closing blades (4) are configured to simultaneously pivot between the closed position so as to prevent air flow through the blast damper (1), and the open position so as to allow air flow through the blast damper (1).

## Patentansprüche

1. Explosionsschutzklappe (1) umfassend
einen Rahmen (2), der einen Strömungskanal (3) für eine Luftströmung durch die Explosionsschutzklappe (1) definiert, wobei der Strömungskanal (3) ein anströmseitiges Ende (9) und ein abströmseitiges Ende (10) definiert,
im Strömungskanal (3) schwenkbar angeordnete Verschlusslamellen (4), wobei jede Verschlusslamelle (4) um eine Schwenkachse zwischen einer geschlossenen Stellung und einer offenen Stellung geschwenkt werden kann, und wobei jede Verschlusslamelle (4) über ein Achsmittel (5) am Rahmen (2) schwenkbar gelagert ist,
einen Stellmechanismus (20), der ausgelegt ist zum gleichzeitigen Schwenken einer jeden Verschlusslamelle (4) zwischen der geschlossenen Stellung, um eine Luftströmung durch die Explosionsschutzklappe (1) zu verhindern, und der offenen Stellung, um eine Luftströmung durch die Explosionsschutzklappe (1) zu gestatten, und
eine Abschirmung (11) am anströmseitigen Ende (9) des Strömungskanals (3),
**gekennzeichnet**
**dadurch, dass** die Abschirmung (11) aus einem flächigen Material ausgebildet ist und planflächig ist und mit Durchflussöffnungen (12) versehen ist,
dadurch, dass das flächige Material eine Metallplatte ist,
dadurch, dass das flächige Material eine monolithische Struktur aufweist, und
dadurch, dass die Abschirmung (11) eine monolithische Struktur aufweist.

2. Explosionsschutzklappe (1) nach Anspruch 1, **gekennzeichnet**
**dadurch, dass** der Rahmen (2) einen ersten planflächigen Flansch (13) am anströmseitigen Ende (9) des Strömungskanals (3) aufweist.

3. Explosionsschutzklappe (1) nach Anspruch 2, **gekennzeichnet**
**dadurch, dass** der Rahmen (2) einen zweiten planflächigen Flansch (14) am abströmseitigen Ende (10) des Strömungskanals (3) aufweist, wobei der erste planflächige Flansch (13) und der zweite planflächige Flansch (14) im Wesentlichen parallel sind, und
dadurch, dass der Rahmen (2) einen Stegabschnitt (15) zwischen dem ersten planflächigen Flansch (13) und dem zweiten planflächigen Flansch (14) aufweist.

4. Explosionsschutzklappe (1) nach Anspruch 2 oder 3, **gekennzeichnet**
**dadurch, dass** die Abschirmung (11) parallel zum ersten planflächigen Flansch (13) ist.

5. Explosionsschutzklappe (1) nach einem der Ansprüche 2 bis 4, **gekennzeichnet**
**dadurch, dass** die Abschirmung (11) so montiert ist, dass sie an den ersten planflächigen Flansch (13) des Rahmens (2) anstößt.

6. Explosionsschutzklappe (1) nach Anspruch 5, **gekennzeichnet**
**dadurch, dass** die Abschirmung (11) einen Rahmenteil (16) aufweist, der so ausgelegt ist, dass er an den ersten planflächigen Flansch (13) des Rahmens (2) anstößt, und der mit Durchgangslöchern (17) für Befestigungsmittel versehen ist, um die Abschirmung (11) am ersten planflächigen Flansch (13) des Rahmens (2) zu befestigen, und
dadurch, dass die Durchflussöffnungen (12) in einem vom Rahmenteil (16) umgebenen Mittelteil vorgesehen sind.

7. Explosionsschutzklappe (1) nach einem der Ansprüche 2 bis 6, **gekennzeichnet**
**dadurch, dass** die Abschirmung (11) die gleiche Dicke wie der erste planflächige Flansch (13) des Rahmens (2) aufweist.

8. Explosionsschutzklappe (1) nach einem der Ansprüche 1 bis 7, **gekennzeichnet**
**dadurch, dass** die Durchflussöffnungen (12) der Abschirmung (11) durch ein aus Material des planflächigen monolithischen Teils ausgebildetes Gitter mit längs verlaufenden Gitterelementen (18) und quer verlaufenden Gitterelementen (19) ausgebildet ist.

9. Explosionsschutzklappe (1) nach einem der Ansprüche 1 bis 8, **gekennzeichnet**
**durch** einen Stellmechanismus (20), der Drehhebel (7) dergestalt umfasst, dass ein Drehhebel (7) am Achsmittel (5) jeder Verschlusslamelle (4) befestigt ist und ein gemeinsamer Bedienhebel (8) an jedem Drehhebel (7) drehbar befestigt ist, so dass die Verschlusslamellen (4) ausgelegt sind zum gleichzeitigen Schwenken zwischen der geschlossenen Stellung, um eine Luftströmung durch die Explosionsschutzklappe (1) zu verhindern, und der offenen Stellung, um eine Luftströmung durch die Explosionsschutzklappe (1) zu gestatten.

## Revendications

1. Clapet anti-souffle (1) comprenant
un cadre (2) définissant un canal d'écoulement (3) pour un flux d'air à travers le clapet anti-souffle (1), ledit canal d'écoulement (3) définissant une extrémité amont (9) et une extrémité aval (10),
des lames de fermeture (4) disposées de manière pivotante dans le canal d'écoulement (4), chaque lame de fermeture (4) pouvant être pivotée autour d'un axe de pivotement entre une position fermée et une position ouverte, et chaque lame de fermeture (4) étant logée de manière pivotante au cadre (2) moyennant des moyens d'axe (5),
un mécanisme d'actionnement (20) configuré pour faire pivoter chaque lame de fermeture (4) simultanément entre la position fermée de manière à empêcher un flux d'air à travers le clapet anti-souffle (1) et la position ouverte de manière à autoriser un flux d'air à travers le clapet anti-souffle (1), et
un écran protecteur (11) à l'extrémité amont (9) du canal d'écoulement (3),
**caractérisé**
**en ce que** l'écran protecteur (11) est fait d'un matériau plat et est plan et est pourvu d'ouvertures d'écoulement (12),
**en ce que** le matériau plat est une plaque métallique,
**en ce que** le matériau plat a une structure monolithique, et
**en ce que** l'écran protecteur (11) a un structure monolithique.

2. Clapet anti-souffle (1) selon la revendication 1, **caractérisée**
**en ce que** le cadre (2) comprend une première flasque plane (13) à l'extrémité amont (9) du canal d'écoulement (3).

3. Clapet anti-souffle (1) selon la revendication 2, **caractérisé**
**en ce que** le cadre (2) comprend une deuxième flasque plane (14) à l'extrémité aval (10) du canal d'écoulement (3), dans lequel la première flasque plane (13) et la deuxième flasque plane (14) sont essentiellement parallèles, et
**en ce que** le cadre (2) comprend une section d'âme (15) entre la première flasque plane (13) et la deuxième flasque plane (14).

4. Clapet anti-souffle (1) selon la revendication 2 ou 3, **caractérisé**
**en ce que** l'écran protecteur (11) est parallèle à la première flasque plane (13).

5. Clapet anti-souffle (1) selon l'une des revendications 2 à 4, **caractérisé**
**en ce que** l'écran protecteur (11) est monté de manière à buter contre la première flasque plane (13) du cadre (2).

6. Clapet anti-souffle (1) selon la revendication 5, **caractérisé**
**en ce que** l'écran protecteur (11) comporte une partie de cadre (16) qui est configurée pour buter contre la première flasque plane (13) du cadre (2) et qui est pourvue de trous de passage (17) pour des moyens de fixation afin de fixer l'écran protecteur (11) à la première flasque plane (13) du cadre (2), et
**en ce que** les ouvertures d'écoulement (12) sont prévues dans une partie centrale qui est entourée par la partie de cadre (16).

7. Clapet anti-souffle (1) selon l'une des revendications 2 à 6, **caractérisé**
**en ce que** l'écran protecteur (11) a la même épaisseur que la première flasque plane (13) du cadre (2).

8. Clapet anti-souffle (1) selon l'une des revendications 1 à 7, **caractérisé**
**en ce que** les ouvertures d'écoulement (12) de l'écran protecteur (11) sont formées par une grille avec des éléments de grille longitudinaux (18) et des éléments de grille transversaux (19) formés par le matériau de la partie monolithique plane.

9. Clapet anti-souffle (1) selon l'une des revendications 1 à 8, **caractérisé**
**par** un mécanisme d'actionnement (20) comprenant des leviers tournants (7) de sorte qu'un levier tournant (7) est attaché au moyen d'axe (5) de chaque lame de fermeture (4) et un levier de commande commun (8) attaché de manière rotative à chaque levier tournant (7) de sorte que les lames de fermeture (4) sont configurées pour pivoter simultanément entre la position fermée de manière à empêcher un flux d'air à travers le clapet anti-souffle (1) et la position ouverte de manière à autoriser un flux d'air à travers le clapet anti-souffle (1).
